(19) Europäisches Patentamt
European Patent Office
Office européen des brevets

(11) **EP 1 824 366 B1**

(12) **FASCICULE DE BREVET EUROPEEN**

(45) Date de publication et mention
de la délivrance du brevet:
**19.11.2008 Bulletin 2008/47**

(21) Numéro de dépôt: **05824637.2**

(22) Date de dépôt: **05.12.2005**

(51) Int Cl.:
***A47J 39/02*** *(2006.01)*

(86) Numéro de dépôt international:
**PCT/FR2005/003037**

(87) Numéro de publication internationale:
**WO 2006/061499 (15.06.2006 Gazette 2006/24)**

(54) **APPAREIL TRANSPORTABLE POUR LE CHAUFFAGE D'ALIMENTS**

TRAGBARE NAHRUNGSMITTELERHITZUNGSVORRICHTUNG

TRANSPORTABLE FOOD-HEATING APPARATUS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.12.2004 FR 0412970**

(43) Date de publication de la demande:
**29.08.2007 Bulletin 2007/35**

(73) Titulaire: **SEB SA**
**69130 Ecully (FR)**

(72) Inventeur: **MAUFFREY, Guy**
**F-70280 Breuchotte (FR)**

(74) Mandataire: **Lemoine, Jean-Sébastien et al**
**Novagraaf Technologies,**
**122, rue Edouard Vaillant**
**92593 Levallois-Perret Cedex (FR)**

(56) Documents cités:
**DE-A1- 19 807 388**       **US-A1- 2003 106 889**
**US-B1- 6 796 218**

EP 1 824 366 B1

**Description**

La présente invention concerne, de façon générale, le domaine des appareils transportables chauffants pour le chauffage d'aliments.

Plus particulièrement, l'invention concerne un appareil transportable pour le réchauffage d'aliments comprenant un récipient de chauffe, ce récipient ayant :

- des surfaces intérieure et extérieure,
- un fond sensiblement plat,
- au moins une paroi latérale,
- un couvercle amovible adapté pour fermer hermétiquement le récipient,
- au moins une résistance chauffante électriquement résistive dotée d'au moins deux extrémités de connexion électrique pour son alimentation électrique.

Ladite résistance permet à l'utilisateur de l'appareil de brancher celui-ci à une source de courant et de réchauffer alors les aliments contenus dans le récipient sur le lieu ou proche du lieu où il souhaite consommer ceux-ci.

Un tel appareil chauffant portable permet de réchauffer des aliments en divers endroits tels que sur le lieu de travail, en camping ou en déplacement. Toutefois les appareils actuellement connus sont relativement encombrants par rapport au volume de nourriture qu'ils permettent de réchauffer et possèdent un rendement énergétique de chauffage relativement faibles.

Les documents de l'art antérieur DE 198 07 388 et GB 2 360 697 présentent des appareils transportables pour réchauffer des aliments qui doivent être disposés dans des récipients amovibles particuliers non intégrés aux appareils.

Pour réchauffer des aliments avec ces appareils de l'art antérieur, il est nécessaire de réchauffer non seulement toute la paroi de l'appareil contre laquelle est implantée la piste chauffante, mais également le récipient particulier indépendant et amovible de l'appareil (ce récipient contenant l'aliment). Ces appareils de l'art antérieur sont dotés pour cela d'une puissance de chauffage assez importante, sont lents pour réchauffer les aliments, et sont de plus relativement encombrants et lourds. Par ailleurs avec de tels appareils, le réchauffage est généralement hétérogène dans l'aliment.

La présente invention a ainsi pour but de fournir un appareil transportable pour le réchauffage d'aliments, d'encombrement réduit et ayant un rendement énergétique de chauffage des aliments plus élevé par rapport aux appareils existants afin d'avoir une faible consommation électrique et une bonne rapidité de réchauffage.

A cette fin, l'appareil transportable de l'invention, par ailleurs conforme à la définition générique qu'en donne le préambule défini précédemment, est essentiellement caractérisé en ce que la résistance chauffante est une piste résistive sérigraphiée disposée au contact de la surface extérieure du récipient et maintenue fixement, au niveau du fond du récipient, cet appareil disposant d'un rapport de puissance de chauffe surfacique inférieur à 0.01 watt par millimètre carré et en ce qu'au moins la surface intérieure du récipient est dans un matériau dit alimentaire.

Le terme transportable signifie que l'appareil peut être déplacé et utilisé pour transporter des aliments à réchauffer entre des lieux éloignés tels qu'entre le domicile où l'utilisateur a préparé des aliments et le lieu de travail où il souhaite consommer ces aliments, cet appareil pouvant être porté manuellement et sans effort par l'utilisateur. Pour être transportable, un tel appareil doit peser à vide, c'est à dire sans aliments, moins de 5 kilogrammes et ne doit pas excéder un volume d'encombrement parallélépipédique rectangle dont les dimensions sont inférieures à 1 mètre.

Le terme matériau alimentaire désigne un matériau adapté pour être mis en contact avec des aliments afin de les réchauffer, sans rendre ces aliments impropres à la consommation. Un tel matériau doit notamment résister aux agressions courantes liées à la chauffe et aux aliments ainsi qu'aux ustensiles de cuisine qui peuvent être utilisés lors du réchauffage ou pendant le repas, comme des cuillères ou fourchettes et couteaux.

Il est à noter que le rapport de puissance surfacique de chauffe est la surface totale du fond (exprimée en millimètres carrés) divisée par la puissance normative de la piste résistive (exprimée en watts et figurant normalement sur l'étiquettes de référence située sur l'appareil lui même) calculée selon la norme EN 60335-2-12 (norme des chauffes plats et appareils analogues). La surface totale du fond est la surface située à l'intérieur d'un périmètre formé par la piste résistive disposée au contact du récipient. Conformément à la norme EN 60335-2-12, la puissance normative de la piste chauffante est mesurée en régime de fonctionnement stabilisé, c'est à dire pour le type d'appareil concerné par la présente invention en chauffe d'eau à une température stabilisée de 100°C.

Un tel rapport de 0.01 watt/mm2 (calculé suivant la norme ci-dessus), permet de chauffer un aliment à plus de 63 degrés tout en limitant le risque de le brûler ou de l'assécher. Ainsi, typiquement la puissance électrique totale moyenne de la piste chauffante (c'est à dire la puissance normative de la piste) est inférieure à 300 watts et supérieure à 99 watts, idéalement cette puissance est inférieure à 180 watts et est de l'ordre de 130 watts.

Le rapport de puissance surfacique de 0.01 watt par millimètre carré correspond par exemple à un appareil à fond plat circulaire de diamètre 180 millimètres portant une piste résistive dont la puissance électrique totale moyenne (puissance normative) est de 250 watts.

Avec l'appareil selon l'invention dont la surface intérieure est en matériau alimentaire, il est possible de disposer directement la nourriture dans le récipient de l'appareil, afin de permettre le transport, le chauffage et la consommation des aliments en utilisant ce seul et même récipient qui peut être fermé hermétiquement, et sans avoir à utiliser un récipient amovible intermédiaire.

De plus, le fait que la piste chauffante soit disposée directement au contact de la surface extérieure du récipient permet de transférer la chaleur produite directement de la piste chauffante vers l'aliment, sans être freiné par la mauvaise conductivité thermique entre deux surfaces de récipients posés seulement l'un dans l'autre et sans avoir à traverser la paroi d'un deuxième récipient amovible, comme c'est le cas dans les dispositifs de l'art antérieur. Grâce à l'invention, il n'y a donc plus de perte de chaleur à l'interface entre la paroi du récipient de l'appareil et la paroi du récipient amovible particulier contenant l'aliment à chauffer, ni dans la paroi de ce récipient particulier.

Ainsi, le fait que la piste chauffante ne soit séparée de l'aliment que par le fond du récipient confère à l'appareil selon l'invention, un rendement énergétique de chauffe élevé, une vitesse de chauffe accrue et la possibilité d'une consommation électrique plus faible, par rapport aux appareils de l'art antérieur.

De plus, contrairement aux appareils de l'art antérieur, l'appareil selon l'invention fait office d'assiette, et permet de manger à même celui-ci sans avoir à en retirer un récipient particulier, réduisant ainsi les risques de brûler l'utilisateur et/ou de renverser l'aliment en sortant le récipient particulier.

On peut par exemple faire en sorte que le rapport de puissance de chauffe surfacique soit compris entre 0,003 et 0,008 watt par millimètre carré.

Un tel rapport idéal permet de réchauffer des aliments sans les brûler, ce qui est un but de la présente invention. Grâce à ce mode de réalisation, la température d'une masse d'aliments par exemple comprise entre 200 et 450 grammes ne dépasse pas 80°C dans la ½ heure normalement prévue d'utilisation.

Selon un exemple de réalisation de l'invention, le diamètre du fond est de 160 millimètres et la puissance électrique totale moyenne de la piste (puissance normative) est de 120 watts ce qui permet d'obtenir un rapport de puissance surfacique de 0.006 watts par millimètre carré.

Idéalement le fond de l'appareil est un fond plat circulaire de diamètre compris entre 60 et 240 millimètres et dont la puissance de chauffe est choisie pour définir un rapport de puissance de chauffe surfacique compris entre 0,008 et 0,003 watts par millimètre carré.

On peut également faire en sorte que la piste résistive soit adaptée pour avoir une résistance ohmique croissante avec la température de la piste, de type résistance à coefficient de température positif.

Grâce à cette caractéristique, plus la température de la piste augmente et plus sa résistance augmente, jusqu'à atteindre un équilibre où la température de la piste et sa résistance sont stabilisées. Ainsi en jouant sur les caractéristiques de la résistance, il est possible de définir une température d'équilibre que la piste seule ne pourra dépasser. Le besoin d'une régulation thermique est donc réduit et peut même être supprimé ce qui dans tous les cas permet de réduire le coût de fabrication et le poids de l'appareil.

Selon un mode de réalisation particulier de l'invention, il peut être fait en sorte que l'appareil comporte un limiteur thermique adapté pour couper l'alimentation de l'appareil lorsque celui-ci dépasse un seuil de température dit de sécurité. Ce seuil est choisi pour être supérieur aux températures normales de fonctionnement de l'appareil. Pour cela, ce seuil est préférentiellement supérieur à 130°C lorsque ce capteur est disposé à proximité du fond du récipient et de la résistance chauffante. Il est a noter que ce limiteur thermique n'est pas adapté pour contrôler la température durant la chauffe de l'aliment mais est simplement adapté pour couper l'alimentation de l'appareil lorsque celui-ci dépasse sa température de sécurité.

Selon un mode de réalisation de l'invention, il peut être fait en sorte que la piste résistive soit adaptée pour fonctionner avec une tension d'alimentation de 12 V.

Selon un mode de réalisation préférentiel de l'invention, le récipient est plus large que profond. Ainsi la surface de chauffe qui dépend en partie de la largeur du récipient est importante comparativement à la hauteur d'aliment qui reste faible favorisant ainsi le réchauffage rapide d'aliments et également leur consommation à même le récipient. Par exemple, si la hauteur ou profondeur du récipient est inférieure à 120 mm alors la largeur du fond du récipient est supérieure à 150 mm.

D'autres caractéristiques et avantages de l'invention ressortiront clairement de la description qui en est faite ci-après, à titre indicatif et nullement limitatif, en référence aux dessins annexés, dans lesquels :

la figure 1 représente une coupe transversale d'un appareil transportable pour le chauffage d'aliments selon l'invention ;
la figure 2 représente une vue de dessus d'un exemple de résistance chauffante particulièrement adaptée pour la mise en oeuvre de l'invention et dotée d'une piste chauffante en spirale ;
la figure 3a représente une vue en perspective de l'appareil transportable selon l'invention dans sa position de transport, c'est à dire couvercle fermé ;
la figure 3b représente une vue en perspective de la coque extérieure de l'appareil transportable selon l'invention, démonté, et de son couvercle ;

la figure 4 représente une vue de dessus d'un exemple de résistance chauffante adaptée pour la mise en oeuvre de l'invention et dotée de quatre pistes chauffantes réparties sur huit spirales et connectées parallèles ;

la figure 5 représente une vue en coupe d'un appareil selon l'invention doté d'un système de clipage de couvercle à poignée fixe.

Comme annoncé précédemment, l'invention concerne un appareil transportable pour transporter, stocker, réchauffer de la nourriture préalablement préparée, la servir et la consommer à l'aide d'un seul et même récipient.

L'appareil transportable 1 comprend un récipient de chauffe en forme d'assiette qui est de préférence de forme circulaire, pour le réchauffage d'aliments. Le récipient de chauffe 3, est dans un matériau dit alimentaire, tel qu'en inox et possède une épaisseur inférieure à 5 millimètres et préférentiellement d'environ 1,2 à 2 millimètres. Préférentiellement, l'intérieur du récipient en inox est traité par polissage électrolytique ou émaillage intérieur.

Ce récipient possède des surfaces intérieure 4 et extérieure 11.

Le fond du récipient est sensiblement plat et est solidaire d'une paroi latérale 15 circulaire. La paroi latérale 15 du récipient et sa surface intérieure 4 vont en s'évasant en partant du fond du récipient 3 et en allant vers le bord supérieur 28 du récipient formant ainsi une assiette chauffante transportable. Un tel récipient peut être réalisé par emboutissage d'une même plaque de matériau, tel que l'inox ou une tôle d'acier revêtue d'émail lisse alimentaire côté aliment ou un verre trempé type boro-silicate, type fluosilicate, ou type vitro-céramique.

Un couvercle amovible 17 est adapté pour fermer hermétiquement le récipient 3, et possède pour cela un joint compressible 27 sur toute la surface de contact entre le couvercle 17 et le bord supérieur interne 28 du récipient. Ce joint compressible est préférentiellement en caoutchouc nitrile (NBR) ou en silicone et peut être un joint de type autocuiseur.

La surface intérieure du couvercle est formée par une pièce pare vapeur 36 en thermoplastique de type en polybutylene Terephtalate dit PBT, ou polypropylène et forme un pare vapeur ayant des rebords périphériques disposés à l'intérieur du récipient, ce rebord étant incliné par rapport au fond (lorsque le couvercle est posé sur le récipient) de façon à permettre à l'eau condensée sur le pare vapeur de s'écouler vers l'intérieur du récipient, évitant ainsi à l'aliment de s'assécher durant le réchauffage.

La paroi extérieure du couvercle ou coque extérieure du couvercle 37 est de préférence en polypropylène et est assemblée avec la pièce pare vapeur par vissage, clipage ou collage. La coque extérieure du couvercle 37 et le pare vapeur 36 sont conformés pour créer une chambre 38 (si désirée étanche) à l'intérieur du couvercle 17, cette chambre étanche 38 permettant d'isoler thermiquement l'intérieur du récipient par rapport à l'extérieur, améliorant ainsi le rendement dudit appareil et évitant les risques de brûlure de l'utilisateur.

Ce récipient est ainsi fermé hermétiquement au moins durant la phase de transport de l'assiette chauffante afin d'éviter de renverser la nourriture, afin de la maintenir au chaud si elle a été préalablement préchauffée ou afin d'éviter de la dégrader. Dans un mode de réalisation particulier il peut être prévu un système évitant que la pression à l'intérieur du récipient n'augmente au-delà d'une limite de sécurité et permettant de protéger l'intégrité du récipient.

Un tel système peut être :

- une valve de dépression (non représentée sur les dessins) ouverte soit manuellement avant le réchauffage des aliments, soit s'ouvrant automatiquement dès que la pression interne du récipient dépasse une pression de sécurité ;
- et/ou un aménagement géométrique du joint 27 tel que celui-ci s'écarte légèrement du bord supérieur interne 28 du récipient sur lequel il est en appui dès que la pression interne dépasse la pression de sécurité.

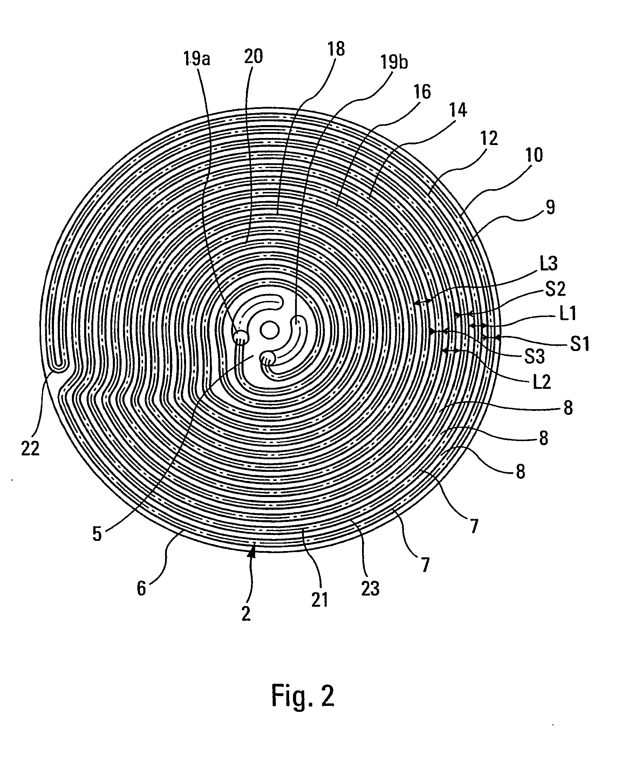

Une résistance chauffante 2 telle qu'une piste résistive chauffante, dotée d'au moins deux extrémités de connexion électrique 19a, 19b (ces extrémités sont visibles sur la figure 2) est disposée au contact de la surface extérieure 11 du récipient, au niveau du fond.

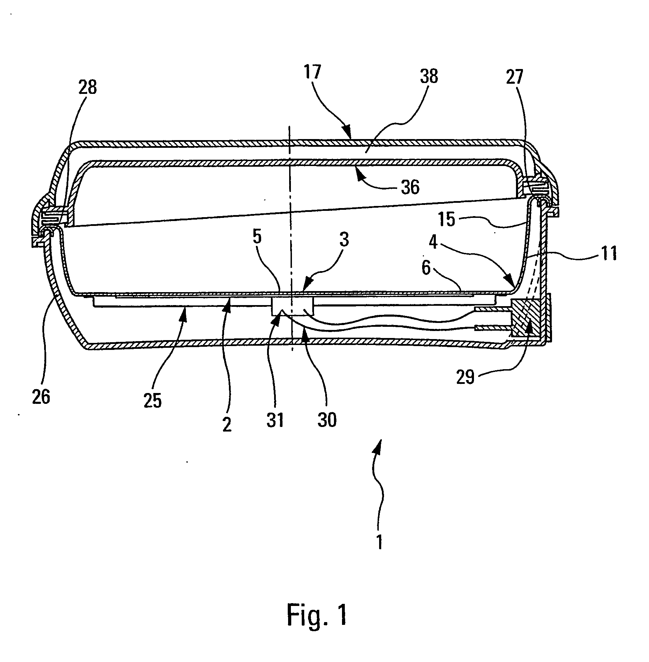

Dans le présent mode de réalisation, comme on le voit clairement sur les figures 1, 2, 4 et 5, la résistance chauffante est maintenue fixement au niveau du fond du récipient et fixé sur sa surface extérieure. La piste chauffante est solidaire du fond, car la surface préférentiellement plane sur laquelle est assemblée la résistance sérigraphiée constitue au moins une partie d'un fond chauffant de l'appareil culinaire transportable de l'invention.

Grâce à cette disposition, la chaleur produite par la piste est transite par conduction directement vers l'aliment contenu dans le récipient en ne traversant que la piste et le fond du récipient en inox. La distance entre la résistance chauffante échauffée par effet Joule (ici une pâte conductrice sérigraphiée en forme de piste allongée) et l'aliment est inférieure ou usuellement égale à 1 ou 1,5 mm. Le ou les matériaux séparant la résistance chauffante de l'aliment sont agencés de façon à permettre un transfert thermique via leur épaisseur, de la source de chaleur vers l'aliment. De tels matériaux sont par exemple du métal ferreux ou non, de l'aluminium, du verre, de la céramique, de la porcelaine, des polymères haute température. De tels matériaux permettent un transfert de chaleur optimisé en réduisant le besoin d'utilisation d'une pièce spécifique de diffusion thermique. La surface de contact importante entre la résistance chauffante et le récipient permet également d'améliorer le rendement de l'appareil ainsi que l'homogénéité de chauffe (cette surface de contact représente au moins de 40% de la surface utile qui est aussi appelée surface de chauffe du fond récipient). En d'autres termes, la surface totale de piste résistive (c'est à dire la surface totale de la piste qui est en contact contre le fond) représente au moins 40% de la surface de chauffe du fond du récipient (c'est à dire la surface totale du fond qui est à l'intérieur d'un périmètre formé par la résistance et englobant cette dernière). Préférentiellement au moins 60% de la surface de chauffe du fond est recouverte par la piste résistive. Cette caractéristique permet d'avoir une température de chauffe relativement homogène sur le fond du récipient évitant ainsi les points de dégradation et de brûlure des aliments.

De plus, l'étalement du moyen chauffant au dos de la surface utile (surface en contact avec l'aliment) est réalisé sans dispositif d'assemblage : les couches diélectriques sont disposés sur le récipient et ne peuvent pas être dissociées manuellement sous forme de couche. Ce mode de réalisation particulier selon l'invention par résistance sérigraphiée est préférable à des techniques de collage de feuilles chauffantes électriquement qui comportent forcément un feuillet isolant électriquement (polymère type kapton, ou mica ou céramique) et qui sont relativement plus isolants thermiquement.

La résistance sérigraphiée de l'appareil selon l'invention permet ainsi une homogénéité de chauffe spatiale et temporelle.

Selon des variantes de l'invention, la piste résistive peut être formée par toute résistance chauffante sérigraphiée comme définie dans les revendications mise en contact et maintenue fixement au niveau du fond du récipient et ce, quel que soit le mode de fixation de la résistance par rapport à l'appareil.

Ainsi, la résistance peut être fixée sur le récipient, comme c'est le cas lorsque la piste résistive est sérigraphiée.

Un réflecteur thermique 25 circulaire et plat est disposé à distance de la piste résistive chauffante 2 et face à la surface extérieure 11 du récipient. Ce réflecteur à pour fonction d'éviter un rayonnement de chaleur provenant de la piste, dans une direction autre que celle de l'aliment pour d'une part réduire la consommation électrique et augmenter le rendement de l'appareil aussi appelé assiette chauffante et d'autre part pour éviter de chauffer les éléments qui sont disposés sous le récipient tels qu'une coque protectrice extérieure 26 en matière plastique. Ce réflecteur peut enfin être dimensionné pour former, une fois positionné par rapport au fond, une chambre d'isolation thermique entre le fond et le réflecteur 25. Avantageusement, ce réflecteur est en tôle d'épaisseur 0.3 ou 0.4 millimètres.

Tel que mentionné précédemment, la puissance de chauffe surfacique est définie judicieusement pour permettre le réchauffage d'aliments tout en évitant qu'il y ait carbonisation de ces aliments. Pour cela, la piste est idéalement prévue pour que les aliments présents dans le récipient puissent être réchauffé au delà de 63°C et dans un temps de l'ordre de 15 à 25 minutes pour un plat individuel en sauce de 400 grammes.

La piste est idéalement prévue pour fonctionner soit avec une alimentation en 12 Volts pour permettre un branchement sur batterie tel que la batterie d'un véhicule, soit avec une alimentation en 230 Volts ou autre. Cette piste est capable de fonctionner sans régulation thermique externe (thermostat et/ou minuterie), ceci étant permis grâce à la résistance ohmique croissante de la piste avec la température. Le chauffage sans régulation thermique (c'est à dire sans régulation tout ou rien via un thermostat) permet d'éviter de « stresser » les aliments, la montée de température étant progressive. Grâce à ce mode de réalisation de l'invention, l'aliment n'est ni surchauffé, ni refroidi transitoirement (ce qui serait le cas si un thermostat était utilisé durant la cuisson).

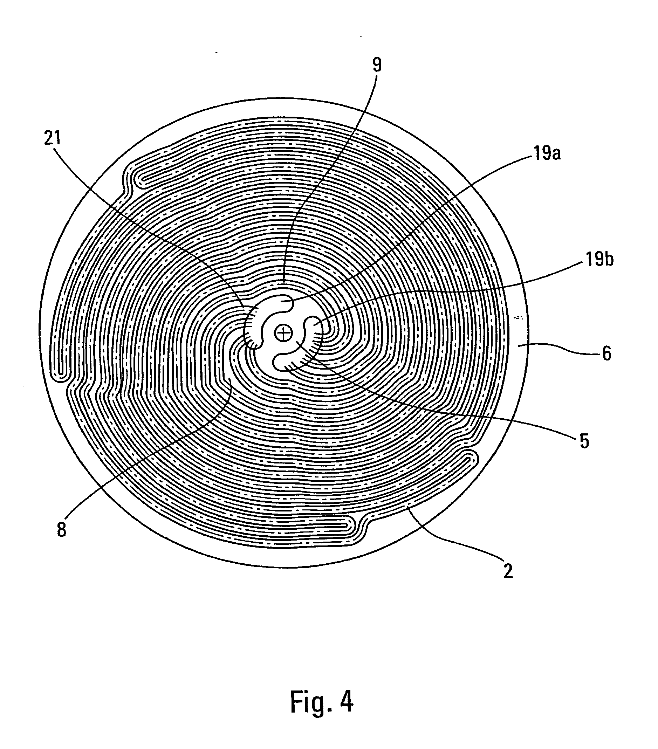

La piste est dimensionnée en fonction du type d'alimentation électrique qu'elle reçoit. Ainsi trois géométries de pistes seront principalement mises en oeuvre, une géométrie pour alimentation en 12 volts (comme celle de la figure 4) alimentée depuis une prise allume cigares de véhicule ou une géométrie pour alimentation en 110 volts ou une géométrie pour alimentation en 220 volts depuis une prise secteur classique (comme celle de la figure 2).

Dans des cas particuliers, il peut être prévu que le fond soit recouvert de plusieurs pistes indépendantes ayant chacune des connexions électriques différentes pour permettre de chauffer le dit récipient en sélectionnant la ou les pistes souhaitées selon le type de chauffe attendu. La sélection peut être éventuellement effectuée via un sélecteur manuel accessible depuis l'extérieur de l'appareil ou grâce à des cordons connecteurs spécifiques amovibles.

D'autre part, la surface extérieure 11 du récipient de chauffe est isolée thermiquement, permettant ainsi le maintien en température des aliments préalablement chauffés, ce qui permet de réduire le temps et la quantité d'énergie nécessaire pour les réchauffer à la température de consommation.

Cette isolation est réalisée en formant un espace rempli d'air entre le récipient et ladite coque protectrice extérieure 26 recouvrant le fond et ladite au moins une paroi latérale 15 du récipient, formant ainsi une double paroi. Le récipient est assemblé avec la coque par l'intermédiaire de pattes de fixation adaptées pour être repliées ou clipsées ou éventuellement par collage.

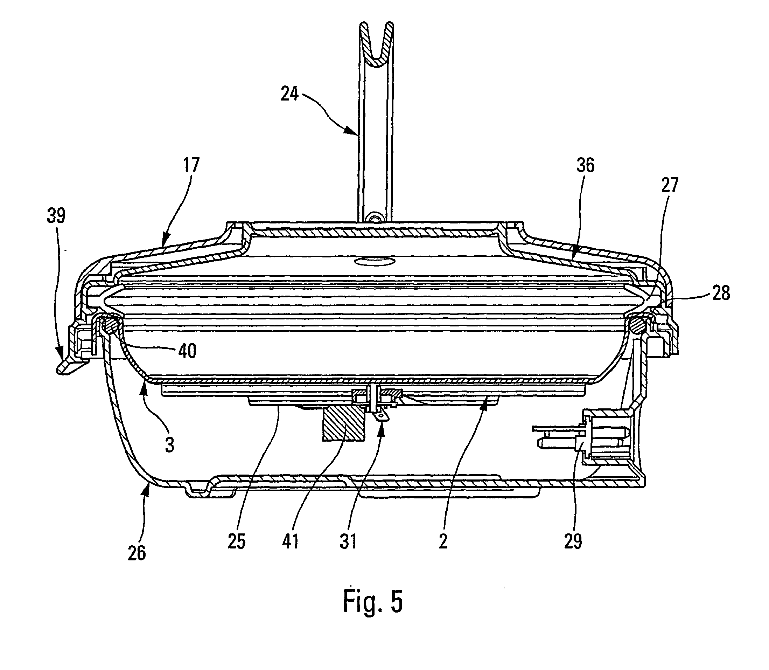

Dans le mode de réalisation de la figure 5, le récipient possède des pattes formées à la périphérie du récipient et repliées vers l'extérieur du récipient, ces pattes passant par des ouvertures pratiquées dans la coque protectrice. Chaque patte est maintenue en position par rapport à la coque par une vis latérale passant dans un passage de vis réalisé dans la patte. Les axes de ces vis sont orientés pour être parallèles au fond de l'appareil. Ces pattes sont préférentiellement parallèles à un axe principal de symétrie de l'appareil perpendiculaire au fond du récipient et sont

EP 1 824 366 B1

disposées à 120° les unes par rapport aux autres autour de cet axe. Les perforations réalisées dans la coque pour le passage des pattes et des vis sont disposées en dehors d'une zone étanche et fermée située entre le récipient et la coque et dans laquelle sont disposées les résistances électriques. De cette façon la zone de présence de composants électriques qui est entre le récipient et la coque est étanche permettant ainsi le lavage et la manipulation de l'appareil sans risque d'électrocution ou de brûlure.

L'étanchéité entre le récipient et la coque protectrice est soit réalisée par un joint à lèvre comme sur la figure 1, soit réalisée par un joint torique 40 comme c'est le cas sur la figure 5.

La coque protectrice extérieure 26, qui est préférentiellement en polypropylène, est une surmoulée par injection autour d'un connecteur étanche 29 ayant pour fonction de permettre un passage étanche de conducteurs électriques entre l'extérieur et l'intérieur de la coque. Eventuellement, ce connecteur étanche 29 peut posséder un voyant lumineux intégré signalant la mise sous tension de la piste chauffante. Les parties de conducteurs électriques du connecteur étanche 29 sont accessibles depuis l'intérieur de la coque protectrice 26 et sont reliées électriquement aux extrémités de connexions électriques 19a et 19b de la piste résistive chauffante par des câbles électriques isolés 30 et par un bloc de connexion central 31 doté de plots de contacts en cuivre venant en appui ou soudé sur les extrémités de connexion de la piste (contacts en argent formés sur la piste). Idéalement le connecteur étanche 19 possède un cordon amovible.

Le bloc de connexion 31 est fixé sur le fond à l'aide d'un moyen de fixation qui est préférentiellement situé à proximité de la zone centrale 5 du fond, ce moyen pouvant être une vis soudée dans la zone centrale du fond, ou une soudure ou un collage du bloc de connexion 31 sur le fond.

Comme représenté sur la figure 5, le bloc de connexion 31 et le réflecteur 25 sont fixés au moyen d'un goujon soudé sur le récipient et sur lequel est vissé un écrou de serrage du réflecteur et du bloc de connexion. Ainsi plusieurs pièces peuvent être maintenues en place à l'aide de ce seul goujon ce qui facilite le montage.

Idéalement, ce connecteur permet également de maintenir le réflecteur thermique 25 centré par rapport au fond et parallèlement à ce dernier. Grâce à cette fixation l'opération d'assemblage du bloc de connexion central 31 et du réflecteur thermique 25 peut être effectuée en une seule opération.

La figure 2 décrit une piste résistive 2 de l'appareil selon l'invention, cette piste résistive est adaptée pour une tension d'alimentation en 120V ou 230V.

Cette piste 2 est disposée autour d'une zone centrale du fond 5, et à l'intérieur d'une zone dite périphérique 6 de ce même fond. Cette piste résistive chauffante est répartie de façon telle que la puissance de chauffe surfacique moyenne diffusée par ladite piste chauffante, lorsque la piste est alimentée électriquement par ses extrémités de connexion, et en régime de fonctionnement stable, soit en moyenne croissante sur toute ladite surface extérieure portant la piste chauffante, en allant de ladite zone centrale 5 vers sa zone périphérique 6.

Cette disposition particulière permet de réduire les écarts de températures existants au niveau du fond. En effet, le niveau de déperdition calorifique étant relativement important sur la zone périphérique 6 du fond et relativement plus faible sur la zone centrale, il est choisi pour homogénéiser la température du fond et éviter les points chauds pouvant détériorer les aliments chauffés, de répartir la puissance de chauffe surfacique moyenne diffusée par ladite piste chauffante de telle façon qu'elle s'accroisse en allant de la zone centrale vers la zone périphérique.

La piste résistive chauffante 2 de la figure 2 est une piste d'épaisseur sensiblement constante constituée par un matériau conducteur de résistance ohmique homogène.

Cette piste chauffante est composée d'arcs 7 (portions de spirales) dont les concavités respectives sont orientées vers la zone centrale 5 de la surface portant la piste chauffante 2. Ces arcs 7 sont répartis de façon sensiblement concentrique, à différentes distances de la zone centrale 5, entre cette zone centrale 5 et la zone périphérique 6 de ladite surface portant la piste 2.

Chaque arc 7 de cette piste est espacé d'un arc voisin de cette même piste par un espace inter-arcs isolant 8 électriquement. Chaque arc de cette piste est conformé de telle manière que le produit de sa section de passage électrique S1, S2, S3 par la largeur de l'espace inter-arcs L1, L2, L3 adjacent à cet arc et situé entre ladite section de passage électrique et la zone centrale soit croissant en allant de la zone périphérique 6 vers la zone centrale 5. Ce mode de réalisation permet ainsi d'avoir une puissance de chauffe surfacique moyenne répartie comme indiqué précédemment.

Les arcs de la piste chauffante sont reliés entre eux, en série, et forment une première spirale chauffante 9 comportant plusieurs spires 10, 12, 14, 16, 14, 16, 18, 20 et s'étendant entre la zone centrale 5 et la zone périphérique 6, chaque spire 10, 12, 14, 16, 18, 20 de ladite première spirale chauffante 9 est espacée d'une spire voisine de cette même première spirale chauffante par un espace inter-spires isolant électriquement 8 et forme une spirale isolante 23.

Une portion de la piste est également formée par une seconde spirale chauffante 21. Les première et seconde spirales chauffantes sont reliées électriquement entre elles, à l'une de leurs extrémités, par une zone de liaison électrique 22. Les spires de la seconde spirale 21 sont situées entre les spires de la première spirale chauffante 9 et à distance de ces dernières, ces spirales chauffantes 9, 21 étant toutes deux spiralées autour de la zone centrale 5, entre la zone centrale 5 et la zone périphérique 6.

Dans le mode de réalisation représenté sur la figure 2, la section de passage électrique des arcs, c'est à dire des première et seconde spirales chauffantes, est constante sur toute la longueur des spirales et la largeur des espaces inter-arcs L1, L2, L3, va en décroissant en partant de la zone centrale 5 vers la zone périphérique 6.

Selon un autre mode de réalisation alternatif du précédent, les espaces inter-arcs situés entre les arcs d'au moins une spirale chauffante ont une dimension sensiblement constante sur toute la longueur de la spirale chauffante et la section de passage électrique de ces arcs croit en allant de la zone périphérique 6 vers la zone centrale 5.

Ces deux modes de réalisations de la piste permettent de répartir la puissance de chauffe surfacique moyenne comme précisé précédemment, c'est à dire en allant en croissant de la zone centrale 5 vers la zone périphérique 6. La figure 4 présente une piste résistive comportant les mêmes caractéristiques que la piste précédemment décrite en référence à la figure 2 mais comportant huit spirales sensiblement concentriques et espacées entre elles au lieu de deux. Chacune de ces spirales est reliée par l'une de ses extrémités à une extrémité de connexion électrique située dans une zone centrale du fond et à l'autre de ses extrémités à une autre spirale (en périphérie du fond). Ainsi il est créé quatre circuits chauffants parallèles ces circuits étant connectés aux extrémités de connexion. Chacun de ces circuits est formé de deux spirales emboîtées l'une dans l'autre. Ce mode de réalisation avec un fond recouvert d'un nombre de spirales disjointes supérieur à deux permet de raccourcir sensiblement la longueur d'une spirale (pour un fond de taille donnée) pour par exemple en définir sa résistance et sa puissance maximale de chauffe. La piste chauffante de la figure 4 est adaptée à une alimentation en 12 volts.

Avantageusement la piste résistive (2) (de la même manière que les pistes de la figure 4) possède une résistance ohmique croissante avec la température de la piste, cette résistance étant donnée par la relation suivants :

$$R\ chaud = R\ froid * (1 + CT * (T1 - T0)$$

R chaud est la résistance ohmique de la piste à la température de chauffe T1 de la piste chauffante en fonctionnement. R froid est la résistance de la piste à température ambiante, c'est à dire à T0 proche de 20°C. CT est le coefficient de température de la pâte servant à fabriquer la piste chauffante, cette valeur est préférentiellement de 0.003 et correspond à 3000 ppm.

Dans cet exemple, en fonctionnement à 100°C, lors du réchauffage d'aliments, la résistance de la piste est de 1.24 fois la valeur de la résistance à froid. Cette valeur étant donnée par :

$$R\ Chaud\ à\ 100°C = R\ froid * (1 + 0.003*(100°C - 20°C))$$

$$= 1.24 * R\ froid$$

L'appareil selon l'invention est défini pour avoir une puissance totale maximale en régime stable à 100°C de 120 watts. Dans ce cas, si la piste est alimentée en 230 volts, sa résistance sera d'environ 441 Ohms ou de 1,2 Ohms si elle est alimentée en 12 volts.

Cette piste est également prévue pour qu'en régime stable la température maximale de la piste en cas de chauffe à sec (c'est à dire sans aliment dans le récipient) soit d'environ 230°C. A cette température la puissance électrique consommée par la piste (alimentée en 12 Volts ou 230 Volts) est 91 watts. Toujours à cette même température, si la piste est alimentée en 230 volts, sa résistance sera d'environ 580 Ohms ou de 1,578 Ohms si elle est alimentée en 12 volts.

Avec une telle température maximale de piste à 230°C, la température au niveau du pare vapeur, lorsque l'appareil chauffe à sec, peut atteindre 165 °C. Cette température de 165°C est suffisamment basse pour ne pas avoir à installer un système de coupure d'alimentation tel qu'un thermostat, à condition de recourir à un matériau de pare vapeur résistant à la chaleur tel que du polybutylene Terephtalate dit PBT.

Dans une variante de l'invention, le pare vapeur 36 est placé à une distance suffisamment grande du fond chauffant de manière à réduire son échauffement et autoriser sa fabrication en polypropylène.

Dans une autre variante, le couvercle 17 est ajouré et l'espace entre le couvercle et le pare vapeur n'est plus étanche et débouche vers l'extérieur de l'appareil de façon à refroidir le pare vapeur avec l'air ambiant. Ce mode de réalisation permet de faire chuter la température du pare vapeur et permet sa réalisation en polyamide.

Dans une autre variante économique de l'invention, le couvercle est réalisé en polypropylène et sans pare vapeur permettant d'alléger l'appareil et de réduire son nombre de pièces au détriment de l'isolation thermique.

Dans une autre variante de l'invention, l'appareil est équipé d'un limiteur de sécurité comme indiqué précédemment, qui empêche une telle élévation de température des pistes et qui permet ainsi d'utiliser un pare vapeur en polypropylène sans risque de la dégrader.

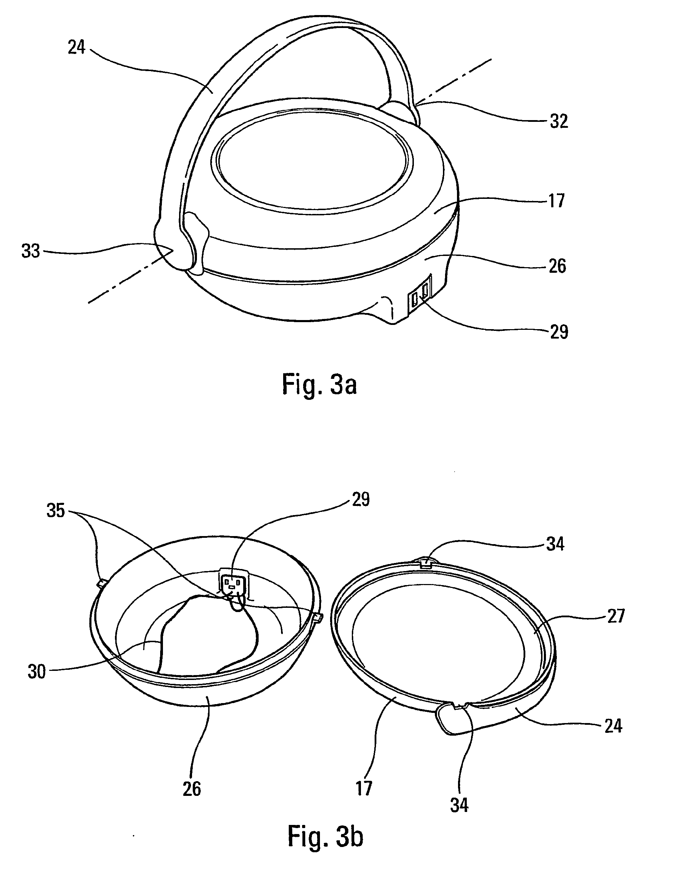

La figure 3a représente une vue extérieure de la coque 26 de l'appareil selon l'invention sur laquelle est positionné le couvercle 17. Dans ce mode de réalisation, l'appareil dispose d'une poignée de transport 24.

Cette poignée de transport 24 est adaptée pour être mobile entre une position de transport (représentée sur la vue 3a) et une position d'ouverture du récipient (représentée sur la vue 3b). Dans sa position de transport ladite poignée maintient ledit couvercle 17 dans une position d'obturation dudit récipient, et dans sa position d'ouverture ladite poignée 24 autorise le déplacement du couvercle 17 pour ouvrir ledit récipient.

Pour cela, la poignée est en forme d'anse. Chaque extrémité de l'anse 24 est reliée au couvercle par un axe de liaison correspondant 32, 33. Ces deux axes de liaisons des extrémités de l'anse sont disposés selon une direction diamétrale du couvercle qui est de forme circulaire. Ainsi l'anse 24 peut pivoter par rapport au couvercle grâce aux axes de liaisons 32 et 33, entre ses positions de transport et d'ouverture du récipient. En position de transport, l'anse est verticale et éloignée du couvercle et en position d'ouverture l'anse est pivotée par basculement dans le plan du couvercle comme cela est représenté sur la figure 3b.

Le couvercle de la figure 3b est représenté en perspective, avec la face interne du couvercle visible.

Cette face interne est la face qui est destinée à être placée en regard de l'intérieur du récipient, cette face interne formant une partie de la surface intérieure du récipient. Dans cette position des moyens d'accroche du couvercle sur la coque extérieure 26 du récipient sont visibles. Ces moyens sont des encoches 34 pratiquées dans chaque extrémité de l'anse, ces encoches étant disposés pour venir en regard d'ergots 35 complémentaires appartenant à la coque extérieure 26, lorsque le couvercle est disposé sur le récipient, et que la poignée est disposée en position d'ouverture.

Chaque encoche est prolongée par une rainure en forme de portion de cercle formée dans un plan perpendiculaire à l'axe de liaison 32, 33, cette portion de cercle ayant pour axe de révolution/symétrie, la direction diamétrale du couvercle selon laquelle sont disposés les axes de liaison 32, 33.

Ainsi, en positionnant le couvercle sur le récipient avec chaque ergot de la coque 26 inséré dans l'encoche correspondante de l'anse, le couvercle est simplement posé sur le récipient et peut être retiré sans avoir à manipuler la poignée qui est en position d'ouverture.

Depuis cette position relative du couvercle sur le récipient, il est possible en pivotant la poignée pour que celle-ci passe dans sa position de transport, de positionner chaque ergot 35 de la coque à l'intérieur de la rainure correspondante de l'anse, permettant ainsi de solidariser le couvercle avec la coque et de compresser le couvercle contre le bord supérieur du récipient visible sur la figure 1.

Dans un mode particulier l'appareil peut présenter plusieurs pistes résistives chauffantes indépendantes les unes des autres chacune de ces pistes étant dédiée à une tension d'alimentation électriques donnée. Par exemple un même appareil peut comporter une piste pour alimentation en 12 volts et une piste pour alimentation en 230 volts. Dans ce cas, des moyens de connexion adaptés sont pourvus pour chaque piste.

Selon une variante économique de l'invention, représentée à la figure 5, la poignée de transport de l'appareil 24 est une anse de préhension faisant partie intégrante du couvercle. Le verrouillage de ce couvercle sur la coque protectrice extérieure est réalisé par trois languettes latérales 39 appartenant au couvercle et s'étendant du couvercle vers la coque. Ces languettes 39 possèdent des portions clipables sur des zones d'accroche complémentaires formées à l'extérieur de la coque 26. Préférentiellement le couvercle possède trois languettes disposées à 120° les unes des autres à la périphérie du couvercle. Le clipage est réalisé soit par déformation de la languette soit par pivotement du couvercle par rapport à la coque (système rotatif à baïonnette).

En résumé, un tel appareil de chauffage d'aliments est particulièrement avantageux car il peut être utilisé pour transporter de la nourriture et la réchauffer aussi bien sur le lieu de travail qu'en voiture. D'autre part, cet appareil étant étanche grâce à sa coque protectrice, et à l'assemblage de celle-ci avec le récipient, il est dès lors possible de le laver directement avec de l'eau sans craindre de l'immerger, cette assiette chauffante étant par exemple lavable dans une machine à laver la vaisselle.

**Revendications**

**1.** Appareil transportable (1) pour le réchauffage d'aliments comprenant un récipient de chauffe (3), ce récipient ayant :

- des surfaces intérieure (4) et extérieure (11),
- un fond sensiblement plat,
- au moins une paroi latérale (15),
- un couvercle amovible (17) adapté pour fermer hermétiquement le récipient (3),
- au moins une résistance chauffante (2) électrique dotée d'au moins deux extrémités de connexion électrique (19a, 19b) pour son alimentation électrique,

l'appareil étant **caractérisé en ce que** la résistance chauffante (2) est une piste résistive sérigraphiée disposée au contact de la surface extérieure (11) du récipient et maintenue fixement, au niveau du fond du récipient, cet appareil disposant d'un rapport de puissance de chauffe surfacique inférieur à 0.01 watt par millimètre carré et **en ce qu'**au moins la surface intérieure (4) du récipient est dans un matériau dit alimentaire.

**2.** Appareil transportable (1) selon la revendication 1, **caractérisé en ce que** ledit rapport de puissance de chauffe surfacique est compris entre 0,003 et 0,008 watt par millimètre carré.

**3.** Appareil transportable (1) selon l'une quelconque des revendications 1 et 2, **caractérisé en ce que** la piste résistive (2) est adaptée pour avoir une résistance ohmique croissante avec la température de la piste, de type résistance à coefficient de température positif.

**4.** Appareil transportable (1) selon la revendication 3, **caractérisé en ce qu'**il comporte une poignée de transport (24) de l'appareil.

**5.** Appareil transportable (1) selon la revendication 4, **caractérisé en ce que** ladite poignée de transport (24) est mobile entre une position de transport et une position d'ouverture du récipient, dans sa position de transport ladite poignée maintient ledit couvercle (17) dans une position d'obturation dudit récipient, et dans sa position d'ouverture ladite poignée (24) autorise le déplacement du couvercle (17) pour ouvrir ledit récipient.

**6.** Appareil transportable (1) selon l'une quelconque des revendications 1 à 5, **caractérisé en ce qu'**un réflecteur thermique (25) est au moins disposé à distance de la piste résistive chauffante (2) et face à ladite surface extérieure (11).

**7.** Appareil transportable (1) selon l'une quelconque des revendications 1 à 6, **caractérisé en ce que** la surface extérieure (11) du récipient de chauffe est isolée thermiquement, permettant ainsi le maintien en température des aliments chauffés.

**8.** Appareil transportable (1) selon la revendication 7, **caractérisé en ce qu'**il comporte une coque protectrice extérieure (26) recouvrant le fond et ladite au moins une paroi latérale (15) du récipient, formant ainsi une double paroi.

**9.** Appareil transportable (1) selon l'une quelconque des revendications 1 à 8, **caractérisé en ce que** la surface intérieure (4) de ladite au moins une paroi latérale (15) du récipient va en s'évasant en partant du fond du récipient (3) formant ainsi une assiette chauffante transportable.

**10.** Appareil transportable (1) selon l'une quelconque des revendications 1 à 9, **caractérisé en ce que** ladite piste résistive chauffante (2) est disposée autour d'une zone centrale du fond (5), et à l'intérieur d'une zone dite périphérique (6) de ce même fond, cette piste résistive chauffante étant répartie de façon telle que la puissance de chauffe surfacique moyenne diffusée par ladite piste chauffante, lorsque la piste est alimentée électriquement par ses extrémités de connexion, et en régime de fonctionnement stable, est en moyenne croissante sur toute ladite surface extérieure portant la piste chauffante, en allant de ladite zone centrale (5) vers sa zone périphérique (6) .

**11.** Appareil transportable (1) selon l'une quelconque des revendications 1 à 10, **caractérisé en ce que** la piste résistive chauffante (2) est une piste d'épaisseur sensiblement constante et constituée par un matériau conducteur de résistance ohmique homogène.

**12.** Appareil transportable (1) selon l'une quelconque des revendications 1 à 11 lorsque combinée à la revendication 10, **caractérisé en ce que** la piste chauffante est composée d'arcs (7) dont les concavités respectives sont orientées vers la zone centrale (5), ces arcs (7) étant répartis de façon sensiblement concentrique, à différentes distances de la zone centrale (5), entre cette zone centrale (5) et la zone périphérique (6).

**13.** Appareil transportable selon la revendication 12, **caractérisé en ce que** lesdits arcs de la piste chauffante sont reliés entre eux, en série, et forment une première spirale chauffante (9) comportant plusieurs spires (10, 12, 14, 16, 18, 20) et s'étendant entre la zone centrale (5) et la zone périphérique (6), chaque spire (10, 12, 14, 16, 18, 20) de ladite première spirale chauffante (9) étant espacée d'une spire voisine de cette même première spirale chauffante par un espace inter-spires isolant électriquement (8) et formant une spirale isolante (23).

**14.** Appareil transportable selon la revendication 13, **caractérisé en ce qu'**il comporte au moins une seconde spirale chauffante (21), les première et seconde spirales chauffantes étant reliées électriquement entre elles à l'une de leurs extrémités par une zone de liaison électrique (22), les spires de la seconde spirale (21) étant situées entre les spires de la première spirale chauffante (9) et à distance de ces dernières, ces spirales chauffantes (9, 21) étant toutes deux spiralées autour de la zone centrale (5), entre la zone centrale (5) et la zone périphérique (6).

15. Appareil transportable selon l'une quelconque des revendications 1 à 14, **caractérisé en ce que** l'appareil comporte un limiteur thermique adapté pour couper l'alimentation électrique de l'appareil lorsque celui-ci dépasse un seuil de température dit de sécurité.

16. Appareil transportable selon l'une quelconque des revendications 1 à 15, **caractérisé en ce que** la piste résistive (2) est adaptée pour fonctionner avec une tension d'alimentation de 12 V.

17. Appareil transportable selon l'une quelconque des revendications 1 à 16, **caractérisé en ce que** le récipient (3) est plus large que profond.

18. Appareil transportable selon l'une quelconque des revendications 1 à 17 **caractérisé en ce que** la piste résistive est fixée sur la surface extérieure du récipient, au niveau de son fond.

**Claims**

1. Transportable food-heating apparatus (1) comprising a heating container (3), this container having:

   - inner (4) and outer (11) surfaces,
   - an essentially flat base,
   - at least one side wall (15),
   - a removable lid (17) adapted to seal the container (3) hermetically,
   - at least one electric heating resistance (2) provided with at least two electric connection ends (19a,19b) for its electric powering,

   the apparatus being **characterized in that** the heating resistance (2) is a screen-printed resistive strip arranged in contact with the outer surface (11) of the container and fixedly held in position at the base of the container, this apparatus having a heating power per unit area of less than 0.01 watt per square millimetre, and **in that** at least the inner surface (4) of the container is in a so-called food-grade material.

2. Transportable apparatus (1) according to claim 1, **characterized in that** said heating power per unit area lies between 0.003 and 0.008 watt per square millimetre.

3. Transportable apparatus (1) according to either of claims 1 and 2, **characterized in that** the resistive strip (2) is adapted to have an ohmic resistance which increases with the temperature of the strip, said resistive strip being a positive temperature coefficient thermistor.

4. Transportable apparatus (1) according to claim 3, **characterized in that** it includes a carrying handle (24) for the apparatus.

5. Transportable apparatus (1) according to claim 4, **characterized in that** said carrying handle (24) is mobile between a container transport position and a container-opening position, in its transport position said handle holds the lid (17) in a closed position of said container, and in its open position said handle (24) allows movement of the lid (17) to open said container.

6. Transportable apparatus (1) according to any of claims 1 to 5, **characterized in that** a heat reflector (25) is at least arranged at a distance from the heaving resistive strip (2) and facing said outer surface (11).

7. Transportable apparatus (1) according to any of claims 1 to 6, **characterized in that** the outer surface (11) of the heating container is heat insulated, thereby enabling the temperature of the heated food to be maintained.

8. Transportable apparatus (1) according to claim 7, **characterized in that** it comprises a protective outer shell (26) covering the base and said at least one side wall (15) of the container, thereby forming a double wall.

9. Transportable apparatus (1) according to any of claims 1 to 8, **characterized in that** the inner surface (4) of said at least one side wall (15) of the container flares outwardly starting from the base of the container (3), thereby forming a transportable heating plate.

10. Transportable apparatus (1) according to any of claims 1 to 9, **characterized in that** said heating resistive strip (2) is arranged around a central area (5) of the base, and inside a so-called peripheral area (6) of this same base, this heating resistive strip being distributed so that the mean heating power per unit area diffused by said heating strip, when the strip is electrically supplied by its connection ends and under stable operation, is an increasing mean over the entire said outer surface carrying the heating strip, starting from said central area (5) and extending towards its peripheral area (6).

11. Transportable apparatus (1) according to any of claims 1 to 10, **characterized in that** the heating resistive strip (2) is a strip of substantially constant thickness formed of a conductive material with homogeneous ohmic resistance.

12. Transportable apparatus (1) according to any of claims 1 to 11 when combined with claim 10, **characterized in that** the heating strip consists of arcs (7) whose respective concavities are oriented towards the central area (5), these arcs (7) being distributed in substantially concentric fashion at different distances from the central area (5), between this central area (5) and the peripheral area (6).

13. Transportable apparatus according to claim 12, **characterized in that** said arcs of the heating strip are connected together in series and form a first heating coil (9) comprising several turns (10,12,14,16,18,20) and extending between the central area (5) and the peripheral area (6), each turn (10,12,14,16,18,20) of said first heating coil (9) being spaced apart from a neighbouring turn of this same first heating coil by an electrically insulating inter-turn distances (8) and forming an insulating coil (23).

14. Transportable apparatus according to claim 13, **characterized in that** it comprises at least one second heating coil (21), the first and second heating coils being electrically connected together at one of their ends by an electric connection zone (22), the turns of the second coil (21) being positioned between the turns of the first heating coil (9) at a distance therefrom, these heating coils (9,21) both being wound around the central area (5), between the central area (5) and the peripheral area (6).

15. Transportable apparatus according to any of claims 1 to 14, **characterized in that** the apparatus comprises a heat limit sensor adapted to cut off the electric supply to the apparatus when the temperature of the apparatus exceeds a temperature threshold called a safety threshold.

16. Transportable apparatus according to any of claims 1 to 15, **characterized in that** the resistive strip (2) is adapted to operate with a 12-Volt supply voltage.

17. Transportable apparatus according to any of claims 1 to 16, **characterized in that** the container (3) is wider than it is deep.

18. Transportable apparatus according to any of claims 1 to 17, **characterized in that** the resistive strip (2) is fixed onto the outer surface of the container at the level of its base part.

**Patentansprüche**

1. Transportfähige Vorrichtung (1) zum Erwärmen von Nahrungsmitteln mit einem Heirbehälter (3), der aufweist:

   Innenflächen (4) und Außenflächen (11),
   einen im Wesentlichen flachen Boden,
   wenigstens eine Seitenwand (15),
   einen lösbaren Deckel (17), der zum hermetischen Verschließen des Behälters (3) geeignet ist,
   wenigstens einen elektrischen Heizwiderstand (2), der für seine elektrische Versorgung mit wenigstens zwei elektrischen Verbindungsenden (19a, 19b) versehen ist,
   wobei die Vorrichtung **dadurch gekennzeichnet ist, dass** der Heizwiderstand (2) eine gedruckte Widerstandsspur ist, die mit der Außenfläche (11) des Behälters in Kontakt und auf der Höhe des Bodens des Behälters festgehalten ist, wobei die Vorrichtung ein Oberflächen-Heizleistungsverhältnis von weniger als 0,01 Watt/mm$^2$

hat, und dass wenigstens die Innenfläche (4) des Behälters aus einem sogenannten Nahrungsmaterial besteht.

2. Transportfähige Vorrichtung (1) nach Anspruch 1, **dadurch gekennzeichnet, dass** das Oberflächen-Heizleistungsverhältnis zwischen 0,003 und 0,008 Watt/mm$^2$ liegt.

3. Transportfähige Vorrichtung (1) nach einem der Ansprüche 1 und 2, **dadurch gekennzeichnet, dass** die Widerstandsspur (2) einen ohmschen Widerstand hat, der mit der Temperatur der Spur zunimmt, nach Art eines Widerstands mit positivem Temperaturkoeffizient,

4. Transportfähige Vorrichtung (1) nach Anspruch 3, **dadurch gekennzeichnet, dass** sie einen Transportgriff (24) der Vorrichtung umfasst.

5. Transportfähige Vorrichtung (1) nach Anspruch 4, **dadurch gekennzeichnet, dass** der Transportgriff (24) zwischen einer Transportposition und einer Position zum Öffnen des Behälters bewegbar ist, wobei der Griff in der Transportposition den Deckel (17) in einer den Behälter verschließenden Position hält und der Griff (24) in seiner Öffnungsposition das Bewegen des Deckels (17) zum Öffnen des Behälters erlaubt.

6. Transportfähige Vorrichtung (1) nach einem der Ansprüche 1 bis 5, **dadurch gekennzeichnet, dass** ein thermischer Reflektor (25) zumindest mit Abstand zu der Heizwiderstandsspur (2) und der Außenfläche (11) gegenüberliegend angeordnet ist.

7. Transportfähige Vorrichtung (1) nach einem der Ansprüche 1 bis 6, **dadurch gekennzeichnet, dass** die Außenfläche (11) des Heizbehälters thermisch isoliert ist, so dass erwärmte Nahrungsmittel ihre Temperatur beibehalten können.

8. Transportfähige Vorrichtung (1) nach Anspruch 7, **dadurch gekennzeichnet, dass** sie eine äußere Schutzschale (26) aufweist, die den Boden und die wenigstens eine Seitenwand (15) des Behälters abdeckt und so eine Doppelwand bildet.

9. Transportfähige Vorrichtung (1) nach einem der Ansprüche 1 bis 8, **dadurch gekennzeichnet, dass** die Innenfläche (4) der wenigstens einen Seitenwand (15) des Behälters ausgehend von dem Boden des Behälters (3) sich erweitert und so einen transportfähigen heizbaren Teller bildet,

10. Transportfähige Vorrichtung (1) nach einem der Ansprüche 1 bis 9, **dadurch gekennzeichnet, dass** die Heizwiderstandsspur (2) um einen zentralen Bereich des Bodens (5) und dem Inneren einer sogenannten Umfangszone (6) dieses Boden angeordnet ist, wobei die Heizwiderstandsspur so aufgeteilt ist, dass die mittlere Oberflächenheizleistung, welche von der Heizspur abgegeben wird, wenn die Spur an ihren Verbindungsenden elektrisch versorgt wird und im stabilen Betrieb arbeitet, über die gesamte Außenfläche, welche die Heizspur trägt, einen zunehmenden Mittelwert von dem zentralen Bereich (5) in Richtung des Umfangsbereichs (6) hat.

11. Transportfähige Vorrichtung (1) nach einem der Ansprüche 1 bis 10, **dadurch gekennzeichnet, dass** die Heizwiderstandsspur (2) eine Spur mit im Wesentlichen konstanter Dicke ist und aus einem Leitermaterial mit homogenem ohmschen Widerstand gebildet ist.

12. Transportfähige Vorrichtung (1) nach einem der Ansprüche 1 bis 11, kombiniert mit Anspruch 10, **dadurch gekennzeichnet, dass** die Heizspur aus Bögen (7) zusammengesetzt ist, die in Richtung des zentralen Bereichs (5) konkav sind, wobei diese Bögen (7) im Wesentlichen konzentrisch mit unterschiedlichen Abeständen zu dem zentralen Bereich (5) zwischen diesem zentralen Bereich (5) und dem Umfangsbereich (6) angeordnet sind.

13. Transportfähige Vorrichtung (1) nach Anspruch 12, **dadurch gekennzeichnet, dass** die Bögen der Heizspur in Reihe miteinander verbunden sind und eine erste Heizspirale (9) bilden, die mehrere Windungen (10, 12, 14, 16, 18, 20) aufweist und sich zwischen dem zentralen Bereich (5) und dem Umfangsbereich (6) erstreckt, wobei jede Windung (10, 12, 14, 16, 18, 20) der ersten Heizspirale (9) von einer Nachbarwindung dieser selben ersten Heizspirale durch einen elektrisch isolierenden Zwischenraum (8), der eine Isolationsspirale (23) bildet, getrennt ist.

14. Transportfähige Vorrichtung (1) nach Anspruch 13, **dadurch gekennzeichnet, dass** sie wenigstens eine zweite Heizspirale (21) aufweist, wobei die erste und die zweite Heizspirale an ihren beiden Enden über eine elektrische Verbindungszone (22) elektrisch verbunden sind, wobei die Windungen der zweiten Spirale (21) zwischen den Windungen der ersten Heizspirale (9) liegen und von dieser einen Abstand haben, wobei die Heizspiralen (9, 21) beide Spiralen um den zentralen Bereich (5) herum zwischen dem zentralen Bereich (5) und dem Umfangsbereich (6) sind.

15. Transportfähige Vorrichtung (1) nach einem der Ansprüche 1 bis 14, **dadurch gekennzeichnet, dass** die Vorrichtung einen thermischen Begrenzer aufweist, der die elektrische Versorgung der Vorrichtung unterbrechen kann, wenn er eine sogenannte Temperatursicherheitsschwelle überschreitet.

16. Transportfähige Vorrichtung (1) nach einem der Ansprüche 1 bis 15, **dadurch gekennzeichnet, dass** die Widerstandsspur (2) mit einer Versorgungsspannung von 12 V arbeiten kann.

17. Transportfähige Vorrichtung (1) nach einem der Ansprüche 1 bis 16, **dadurch gekennzeichnet, dass** der Behälter (3) eine größere Höhe als Tiefe hat.

18. Transportfähige Vorrichtung (1) nach einem der Ansprüche 1 bis 17, **dadurch gekennzeichnet, dass** die Widerstandsspur auf der Außenfläche des Behälters auf der Höhe seines Boden befestigt ist.

Fig. 1

Fig. 2

24

32

17

33

26

29

## Fig. 3a

35

29

34

30

27

26

17

34

24

## Fig. 3b

Fig. 4

Fig. 5

**EP 1 824 366 B1**

**RÉFÉRENCES CITÉES DANS LA DESCRIPTION**

**Documents brevets cités dans la description**

- DE 19807388
- GB 2360697 A